Europäisches Patentamt

European Patent Office

Office européen des brevets

(19)

(11)　EP 1 260 261 A1

(12)　EUROPEAN PATENT APPLICATION

(43) Date of publication:
27.11.2002　Bulletin 2002/48

(51) Int Cl.7: B01D 39/16

(21) Application number: 02011211.6

(22) Date of filing: 21.05.2002

(84) Designated Contracting States:
AT BE CH CY DE DK ES FI FR GB GR IE IT LI LU
MC NL PT SE TR
Designated Extension States:
AL LT LV MK RO SI

(30) Priority: 21.05.2001 JP 2001151494

(71) Applicant: NITTO DENKO CORPORATION
Osaka (JP)

(72) Inventors:
• Maeoka, Takuya
Ibaraki-shi, Osaka (JP)
• Kawano, Eizo
Ibaraki-shi, Osaka (JP)

(74) Representative: Grünecker, Kinkeldey,
Stockmair & Schwanhäusser Anwaltssozietät
Maximilianstrasse 58
80538 München (DE)

(54) **Turbine air filter media**

(57)　Turbine air filter media include at least one porous film of polytetrafluoroethylene, and at least one air-permeable support member, wherein the turbine air filter media exhibit a pressure drop of from 100 Pa to 300 Pa, both inclusively, and a PF value of not smaller than 15. The porous film of polytetrafluoroethylene preferably exhibits a pressure drop of from 70 Pa to 250 Pa, both inclusively, and a PF value of not smaller than 18.

## FIG. 1

**Description**

The present application is based on Japanese Patent Application No. 2001-151494, which is incorporated herein by reference.

BACKGROUND OF THE INVENTION

1. Field of the Invention

The present invention relates to filter media which are used on an air intake side of a turbine such as a gas turbine or a steam turbine installed in an electric power plant and which are adapted for collecting suspended particles in air or gas.

2. Description of the Related Art

Glass fiber filter media provided as paper filter media made of glass fiber mixed with a binder, or polypropylene fiber filter media provided as electret filter media made of nonwoven fabric of polypropylene (PP) fiber have been used as filter media used on an air intake side of a gas turbine. Such filter media have some problems. For example, the glass fiber filter media contain fibrils deposited on the filter media per se, so that the glass fiber filter media have self-dusting characteristic in which the fibrils are generated as dust when the glass fiber filter media are bent. The glass fiber dropped out of the filter enters the turbine, so that the glass fiber is deposited on a fan. When such fine particles enter the turbine, the heat efficiency of the gas turbine is lowered. Therefore, air filter media having no self-dusting characteristic and having higher particle collecting efficiency have been demanded. On the other hand, in order to reduce the power cost required for taking air necessary for combustion into the turbine, it is also necessary to reduce the pressure drop of the air filter . The glass fiber filter media, however, have a problem that it is difficult to achieve both improvement in combustion efficiency and reduction in power cost consistently because the PF (Performance of Filter) value which is a measure of indicating balance between particle collecting efficiency and pressure drop is low.
Because the filter media are clogged with collected dust, the pressure drop increases with the lapse of time when the gas turbine is operating. Cleaning the filter media with water or the like is effective in reusing the clogged filter media. The electret filter media of PP fiber, however, have a problem that the performance of the filter media is lowered greatly when the filter media are cleaned because the filter media are inferior in water resistance.

SUMMARY OF THE INVENTION

Therefore, an object of the invention is to provide turbine air filter media which are free from contamination of a turbine, high in particle collecting efficiency and low in pressure drop and which can be reused by cleaning while deterioration of performance is suppressed.
In order to achieve the object, according to the invention, there are provided turbine air filter media including at least one porous film of polytetrafluoroethylene (hereinafter abbreviated to "PTFE"), and at least one air-permeable support member, wherein the turbine air filter media exhibit a pressure drop of from 100 Pa to 300 Pa, both inclusively, and a PF value of not smaller than 15.
The PF value is a numerical value determined by the following expression (1):

$$\text{PF value} = \{-\log (1 - E/100)/L\} \times 100 \qquad (1)$$

In the expression (1), L is the pressure drop [mmH$_2$O], and E is the particle collecting efficiency [%]. The pressure drop L is a numerical value taken at a linear speed of 5.3 cm/sec. The particle collecting efficiency is a numerical value taken about particles with a particle size range of from 0.1 μm to 0.2 μm.
In the filter media according to the invention, preferably, the PTFE porous film exhibiting a pressure drop of from 70 Pa to 250 Pa, both inclusively, and a PF value of not smaller than 18 is used.
Features and advantages of the invention will be evident from the following detailed description of the preferred embodiments described in conjunction with the attached drawings.

BRIEF DESCRIPTION OF THE DRAWINGS

In the accompanying drawings:

Fig. 1 is a sectional view showing an embodiment of filter media according to the invention; and
Fig. 2 is a graph showing the relation between the number of times of cleaning and pressure drop in an embodiment of the invention.

DETAILED DESCRIPTION OF THE PREFERRED EMBODIMENTS

Apreferred embodiment of the invention will be described below.

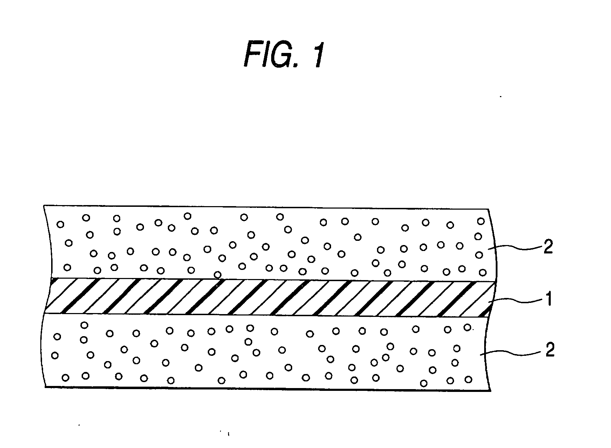

Fig. 1 is a sectional view showing an example of filter media according to the invention. A pair of air-permeable support members 2 are disposed on opposite upper and lower surfaces of a PTFE porous film 1.

Each of the air-permeable support members 2 as to the material, structure and form thereof is not particularly limited if it can function as a reinforcing member. Preferably, a material superior, in air permeability, to the PTFE porous film can be used as the air-permeable support member 2. For example, a porous material such as felt, nonwoven fabric, woven fabric, ormesh (net sheet) canbeused. Particularly, nonwoven fabric is preferred from the point of view of strength, particle collecting property, flexibility and workability. The nonwoven fabric used may be constituted by conjugated fiber which is formed so that part or all of fiber constituting the nonwoven fabric has a core-sheath structure in which the core component is higher in melting point than the sheath portion. Incidentally, polyolefin (such as polyethylene (PE) or polypropylene (PP)), polyamide, polyester (such as polyethylene terephthalate (PET)), aromatic polyamide, or composite material thereof may be used as the material of the air-permeable support member.

The PTFE porous film 1 is suitable for being reused by cleaning because the film itself has water repellency. Amethod for producing the PTFE porous film will be described below. First, a paste-like mixture in which liquid lubricant is added to PTFE fine powder is preformed. The PTFE fine powder is not particularly limited. A product available on the market may be used as the PTFE fine powder. Any suitable material may be used as the liquid lubricant if it can make the surface of the PTFE fine powder wet and can be removed by extraction or heating. For example, hydrocarbon such as liquid paraffin, naphtha or white oil can be used as the liquid lubricant. The amount of the liquid lubricant to be mixed is preferably from about 5 parts to about 50 parts by weight with respect to 100 parts by weight of the PTFE fine powder. The preforming is carried out under such pressure that the liquid lubricant is not squeezed.

Then, the preformed mixture is molded into a sheet shape by paste extrusion or pressure roll. Then, the PTFE molded article is stretched in at least one axial direction so as to become porous. The stretching of the PTFE molded article is preferably performed after the liquid lubricant is removed. The removal of the liquid lubricant may be preferably performed by a heating method or an extraction method.

The promotion of fibrillation of the porous film increases as the magnification of stretching of the sheet-like molded article in the lengthwise direction increases. The magnification of stretching is preferably set to be in a range of from 8 times to 30 times from the point of view of stretchability. The temperature for stretching is generally preferably set to be in a range of from 150 to 327°C. In the case of biaxial stretching, the magnification of stretching and the temperature for stretching in the lengthwise direction are set to be in these preferable ranges respectively whereas the magnification of stretching and the temperature for stretching in the widthwise direction are preferably set to be in a range of from 4 times to 40 times and in a range of from 25 to 150°C respectively.

The stretched PTFE porous film is weak in strength when it has been not baked yet. Therefore, the stretched PTFE porous film is preferably heated. The temperature for heating is preferably set to be not lower than the melting point of the PTFE baked body, for example, in a range of from 350 to 450°C. The heating method is not particularly limited. For example, a method of blowing hot air against the PTFE porous film or a method of making the PTFE porous film pass through a high-temperature furnace may be used as the heating method.

The pressure drop and PF value of the filter media according to the invention depend largely on the characteristic of the PTFE porous film. The characteristic of the PTFE porous film is affected by the raw material used, and the pressure roll method and the stretching method in the production process. A PTFE porous film which is produced on the basis of suitable adjustment of these conditions and which exhibits a pressure drop in a range of from 70 to 250 Pa and a PF value of not smaller than 18 may be preferably used in the turbine air filter media.

The method for laminating the air-permeable support members 2 and the PTFE porous film 1 is not particularly limited. They may be simply stacked on one another. Alternatively, a method of lamination using an adhesive agent or a method of lamination using heat maybe applied. For example, in the case of heat lamination, the air-permeable support members may be partially melted by heat to thereby achieve adhesive lamination or a fusion bonding agent such as hot-melt powder may be interposed to thereby achieve adhesive lamination.

Fig. 1 is provided as an example but the configuration of the filter media according to the invention is not limited thereto. For example, two or more layers of PTFE porous films which may be equal in characteristic to one another or different in characteristic from one another may be disposed. For example, one air-permeable support member may be disposed either on the upstream side or on the downstream side of the PTFE porous film.

The total thickness of the air filter media according to the invention is preferably set to be in a range of from 0.1 to 10 mm, especially in a range of from 0.1 to 2.0 mm, further especially in a range of from 0.2 to 1 mm. If the filter media are too thick, the pressure drop may become high or pleating applicability may become worse. If the filter media are too thin, the stiffness may be lowered.

The invention will be described below more in detail by way of example. The respective characteristics of filter media and a PTFE porous film obtained in each of the following Examples and Comparative Examples are measured as follows.

(Pressure drop)

In the condition that each sample was set in a circular holder with an effective area of 100 cm$^2$, a pressure difference was given between the upstream side and the downstream side so that the permeation speed of the sample was adjusted to be 5.3cm/sec as a value measured by a flow meter. In this condition, the pressure loss was measured by a manometer. The measurement was performed at 10 points per sample. The average of measured values was estimated as the pressure drop of the sample.

(Particle Collecting Efficiency)

The permeation speed of each sample was adjusted to be 5.3 cm/sec by use of the same apparatus as that used for measurement of the pressure drop. In this condition, polydispersed dioctyl phthalate (DOP) was supplied to the upstream side so that the concentration of particles with a particle size in a range of from 0.1 to 0.2 μm was not lower than about 10$^e$/liter. The concentration of particles on the upstream side and the concentration of particles transmitted through the sample onto the downstream side were measured by a particle counter. The particle collecting efficiency was calculated on the basis of the following expression (2).

$$\text{Particle Collecting Efficiency (\%)}$$

$$= (1 - \text{particle concentration on the downstream side}$$

$$/\text{particle concentration on the upstream side}) \times 100 \tag{2}$$

(Cleanability)

In the condition that filter media were set in a circular holder with an effective area of 100 cm$^2$, a pressure difference was given between the upstream side and the downstream side so that the permeation speed of the filter media was adjusted to be 5.3 cm/sec as a value measured by a flow meter. In this condition, the initial pressure drop of the filter media was measured by a manometer. Air dust was continuously transmitted through the filter media for 3 days. Then, the pressure drop was measured again and the filter media were removed from the holder. After air with pressure of 1 kg/cm$^2$ was blown against the removed filter media from the downstream side thereof, the filter media were immersed in pure water and cleaned ultrasonically for 30 minutes. Then, the filter media were dried naturally. The pressure drop of the filter media was measured by a manometer in the same condition as described above. After the operation was repeated by 5 times, the particle collecting efficiency was measured under the condition as described above.

(Example 1)

Thirty parts by weight of liquid lubricant (liquid paraffin) were mixed homogeneously with 100 parts by weight of PTFE fine powder. This mixture was preformed under the condition of 20 kg/cm$^2$ and then extrusion-molded into a rod shape. The rod-like mixture was rolled between a pair of metal pressure rolls to thereby obtain a long sheet-like molded article having a thickness of 0.2 mm. Then, the liquid lubricant was removed from the sheet-like molded article by an extraction method using normal decane and then the sheet-like molded article was wound on a pipe-like core so as to be formed into a roll. The sheet-like molded article was stretched to 17 times in a direction of the length thereof at 250°C by a roll stretching method. The sheet-like molded article was further stretched to 5 times in a direction of the width thereof at 100°C by a tenter. Thus, a PTFE porous film which had been not baked yet was obtained. The film was heated at 380°C for 30 seconds so as to be baked. The pressure drop and particle collecting efficiency of the PTFE porous film thus obtained were measured. Table 1 shows results of the measurement in connection with the PF value.

(Example 2)

A PTFE porous film was obtained in the same manner as in Example 1 except that the magnification of stretching in the lengthwise direction was set to be 12 times. The pressure drop and particle collecting efficiency of the PTFE porous film were measured. Table 1 shows results of the measurement in connection with the PF value.

(Example 3)

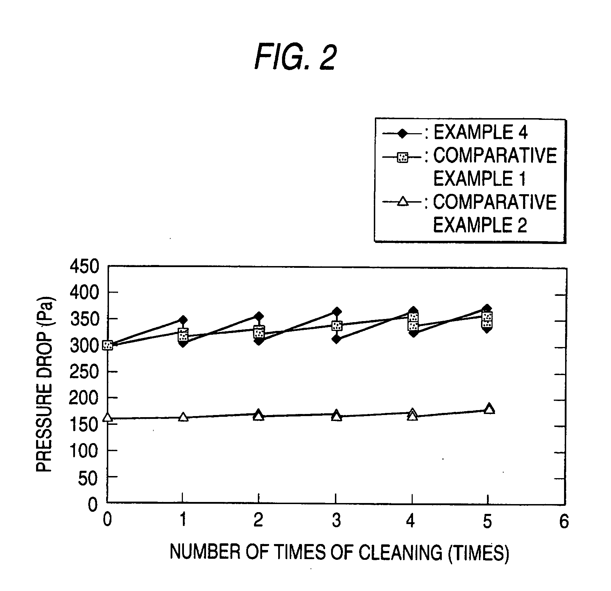

Spunbond nonwoven fabric (T0153WDO made by Unitika Ltd.) with basic weight capacity of 15 g/m$^2$ was used as an air-permeable support member. In the condition that the air-permeable support members were disposed on opposite surfaces of the PTFE porous film obtained in Example 1, the air-permeable support members and the PTFE porous film were laminated by running along a roll at 175°C. Thus, filter media 0.2 mm thick were obtained. The pressure drop and particle collecting efficiency of the filter media were measured. Table 1 shows results of the measurement in connection with the PF value. The cleanability of the filter media was further measured. Fig. 2 and Table 2 show the measured cleanability.

(Example 4)

Filter media 0.2 mm thick were obtained in the same manner as in Example 3 except that the PTFE porous film obtained in Example 2 was used. Table 1 shows the measured pressure drop and particle collecting efficiency of the filter media in connection with the PF value thereof. Fig. 2 and Table 2 show the measured cleanability of the filter media.

(Comparative Example 1)

Table 1 shows, in connection with the PF value, the measured pressure drop and particle collecting efficiency of HEPA filter media made of glass fiber available on the market. Fig. 2 and Table 2 show the measured cleanability of the filter media.

(Comparative Example 2)

Table 1 shows, in connection with the PF value, the measured particle collecting efficiency and pressure drop of HEPA filter media as electret filter media made of PP fiber nonwoven fabric available on the market. Fig. 2 and Table 2 show the measured cleanability of the filter media.

Table 1

|  | Pressure drop (Pa) | Particle Collecting Efficiency (%) (0.1 to 0.2 μm) | PF Value |
|---|---|---|---|
| Example 1 | 100 | 99.01 | 22 |
| Example 2 | 250 | 99.99 or higher | 22 |
| Example 3 | 120 | 99.01 | 16.7 |
| Example 4 | 300 | 99.99 or higher | 18.3 |
| Comparative Example 1 | 250 | 99.11 | 8.2 |
| Comparative Example 2 | 160 | 99.00 | 12.5 |

Table 2

|  | Pressure drop (Pa) | | Particle Collecting Efficiency (%) | |
|---|---|---|---|---|
|  | Initial | After 5 Times of Cleaning | Initial | After 5 Times of Cleaning |
| Example 3 | 120 | 145 | 99.01 | 99.01 |
| Example 4 | 300 | 340 | 99.99 or higher | 99.99 or higher |
| Comparative Example 1 | 300 | 350 | 99.11 | 99.09 |
| Comparative Example 2 | 160 | 172 | 99.00 | 95.00 |

As shown in Table 1, the filter media obtained in each of Examples 3 and 4 were filter media which were high in PF value and excellent in balance between pressure drop and particle collecting efficiency compared with the related-art filter media, especially compared with the glass fiber filter media obtained in Comparative Example 1. It can be confirmed from Examples 2 and 4 that when the pressure drop of the PTFE porous film was set to be not larger than 250 Pa, the pressure drop of the filter media was suppressed to be in a practically allowable range (300 Pa or smaller) for use as turbine air filter media.

As shown in Table 2, the particle collecting efficiency of the electret filter media obtained in Comparative Example 2 was reduced greatly by cleaning whereas the particle collecting efficiency of the filter media obtained in each of Examples 3 and 4 did not change even in the case where cleaning was repeated. As shown in Fig. 2, the filter media obtained in Example 4 exhibited a remarkable cleaning effect in reducing the pressure drop. Incidentally, fiber dropped out of the filter media obtained in each of Examples 3 and 4 was not observed in the measurement.

As described above, according to the invention, there can be provided turbine air filter media which are free from contamination of a turbine, high in particle collecting efficiency and low in pressure drop and which can be reused by cleaning while deterioration of performance is suppressed.

This invention should not be limited to the embodiments described above. Various modifications can be included in this invention within a range which can be easily realized by those skilled in the art without departing from the spirit of the scope of claim.

## Claims

1. A turbine air filter media comprising at least one porous film of polytetrafluoroethylene, and at least one air-permeable support member, wherein said turbine air filter media exhibits a pressure drop of from 100 Pa to 300 Pa, both inclusively, and a PF value of not smaller than 15.

2. A turbine air filter media according to claim 1, wherein said porous film of polytetrafluoroethylene exhibits a pressure drop of from 70 Pa to 250 Pa, both inclusively, and a PF value of not smaller than 18.

3. A turbine air filter media according to claim 1, wherein said air-permeable support member comprises an nonwoven fabric.

4. A turbine air filter media according to claim 3, herein part or all of fiber constituting said nonwoven fabric has a core-sheath structure in which a core component is higher in melting point than a sheath portion.

5. A turbine air filter media according to claim 1, wherein a total thickness of said turbine air filter media is set to be in a range of from 0.1 to 10 mm.

## FIG. 1

## FIG. 2

Legend:
- ◆ — : EXAMPLE 4
- ⊞ — : COMPARATIVE EXAMPLE 1
- △ — : COMPARATIVE EXAMPLE 2

**EP 1 260 261 A1**

**European Patent Office**

**EUROPEAN SEARCH REPORT**

Application Number

EP 02 01 1211

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 090 676 A (DAIKIN IND LTD) 11 April 2001 (2001-04-11) * page 5, line 16 - line 52 * * page 13, line 5 - page 15, line 9 * | 1-5 | B01D39/16 |
| X | EP 0 970 739 A (NITTO DENKO CORP) 12 January 2000 (2000-01-12) * the whole document * | 1-5 | |
| X | EP 0 525 630 A (DAIKIN IND LTD) 3 February 1993 (1993-02-03) * page 3, column 36 - column 58; claims * | 1-5 | |
| X | EP 0 963 775 A (NITTO DENKO CORP) 15 December 1999 (1999-12-15) * page 3, line 38 - page 4, line 18 * | 1-5 | |
| | | | **TECHNICAL FIELDS SEARCHED (Int.Cl.7)** |
| | | | B01D |

The present search report has been drawn up for all claims

| Place of search | Date of completion of the search | Examiner |
|---|---|---|
| THE HAGUE | 30 September 2002 | Plaka, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 02 01 1211

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2002

| Patent document cited in search report | | | Publication date | Patent family member(s) | | | Publication date |
|---|---|---|---|---|---|---|---|
| EP | 1090676 | A | 11-04-2001 | JP | 2001170461 | A | 26-06-2001 |
| | | | | CN | 1292302 | A | 25-04-2001 |
| | | | | EP | 1090676 | A1 | 11-04-2001 |
| | | | | US | 6416562 | B1 | 09-07-2002 |
| EP | 0970739 | A | 12-01-2000 | JP | 2000079332 | A | 21-03-2000 |
| | | | | EP | 0970739 | A1 | 12-01-2000 |
| | | | | US | 6214093 | B1 | 10-04-2001 |
| EP | 0525630 | A | 03-02-1993 | CA | 2074349 | A1 | 24-01-1993 |
| | | | | CN | 1072351 | A ,B | 26-05-1993 |
| | | | | DE | 69208552 | D1 | 04-04-1996 |
| | | | | DE | 69208552 | T2 | 05-09-1996 |
| | | | | DE | 69228002 | D1 | 04-02-1999 |
| | | | | DE | 69228002 | T2 | 10-06-1999 |
| | | | | EP | 0525630 | A2 | 03-02-1993 |
| | | | | EP | 0611790 | A2 | 24-08-1994 |
| | | | | ES | 2086591 | T3 | 01-07-1996 |
| | | | | ES | 2126672 | T3 | 01-04-1999 |
| | | | | JP | 2792354 | B2 | 03-09-1998 |
| | | | | JP | 5202217 | A | 10-08-1993 |
| | | | | KR | 258485 | B1 | 15-06-2000 |
| | | | | KR | 260966 | B1 | 15-06-2000 |
| | | | | KR | 260967 | B1 | 15-06-2000 |
| | | | | RU | 2103283 | C1 | 27-01-1998 |
| | | | | US | 5234739 | A | 10-08-1993 |
| EP | 0963775 | A | 15-12-1999 | JP | 2000061280 | A | 29-02-2000 |
| | | | | EP | 0963775 | A2 | 15-12-1999 |
| | | | | KR | 2000006115 | A | 25-01-2000 |
| | | | | US | 6149702 | A | 21-11-2000 |

EPO FORM P0459